# EUROPÄISCHE PATENTSCHRIFT

(11) **EP 0 419 407 B1**
(45) Veröffentlichungstag und Bekanntmachung des Hinweises auf die Patenterteilung: **29.11.1995**
(21) Anmeldenummer: 90810678.4
(22) Anmeldetag: 06.09.1990
(51) Int. Cl.: C04B 35/48, C04B 38/06

(54) **Keramische Körper aus teilweise stabilisiertem Zirkoniumdioxid**
Partially stabilized zirconia sintered body
Corps céramique en zircone partiellement stabilisée

(30) Priorität: 18.09.1989 US 408739
(43) Veröffentlichungstag der Anmeldung: 27.03.1991
(73) Patentinhaber: SELEE CORPORATION, Hendersonville, N.C. 28792 (US)
(72) Erfinder: Everhart, Richard, Hendersonville, N.C. 28739 (US); Bosomworth, Paul, Hendersonville, N.C. 28739 (US); Butcher, Kenneth, Hendersonville, N.C. 28739 (US); Hoffmann, Matthias, Hendersonville, N.C. 28739 (US)
(74) Vertreter: Burkhart, Hans

(56) Entgegenhaltungen:
- EP-A- 0 036 786
- EP-A- 0 235 936
- DE-B- 1 671 028
- GB-A- 2 168 337
- US-A- 4 760 038
- CHEMICAL ABSTRACTS, Band 77, Nr. 10, 4, September 1972, Seite 263, Zusammenfassung Nr. 65808d, Columbus, Ohio, US; & CZ-A-149 962

## Beschreibung

Vorliegende Erfindung betrifft Keramikkörper gebildet aus teilweise stabilisiertem Zirkoniumdioxid, insbesondere zur Verwendung als Hochtemperaturfilter für geschmolzene Metalle, als Brennhilfsmittel und als Hochtemperaturkatalysatorträger.

Keramische Materialien werden aufgrund ihrer ausgezeichneten thermischen und mechanischen Eigenschaften für Hochtemperaturanwendungen gebraucht. Filter für die Anwendung bei der Filtration von geschmolzenem Metall werden in typischer Weise durch einen Replizierprozess, der in seiner einfachsten Form das Eintauchen eines porösen verbrennbaren Schaummaterials in einen thixotropen keramischen Schlicker und Wärmebehandeln des imprägnierten Schaummaterials, um das Schaummaterial auszubrennen und einen keramischen Körper zu produzieren, hergestellt. Die US 3'947'363; US 4'024'212; US 4'265'659; US 4'391'918 und US 4'610'832 beschreiben solche Replizierprozesse zur Herstellung keramischer Filter. Diese Patentschriften beschreiben auch die verschiedenen Typen von keramischen Materialien die zur Herstellung der Filter verwendet wurden.

Die US 3'947'363 beispielsweise beschreibt die Verwendung eines Schlickers, enthaltend Aluminiumoxid, Chromoxid, Kaolin, Bentonit und kolloidales Aluminiumorthophosphat zur Herstellung von Filterkörpern. Diese Patentschrift erwähnt, dass auch Materialien, wie Mullit, Zirkoniumdioxid, Magnesiumoxid und ähnliche, zusätzlich zu dem Aluminiumoxid- und/oder Chromoxid-Komponenten oder zur Substitution dafür, angewendet werden können, um besondere Eigenschaften zu erreichen. Die GB-A 2 168 337 beschreibt einen keramischen Schaum aus Al₂O₃-ZrO₂ mit einer Wärmefestigkeit bei Temperaturen von 1700°C und mehr. Die US 4'024'212 und die US 4'265'659 beschreiben auch, dass thixotrope keramische Schlicker, angewendet zur Herstellung von keramischen Filtern, eine grosse Auswahl von keramischen Materialien, wie Aluminiumoxid, Chromoxid, Zirkoniumdioxid, Magnesiumoxid, Titanoxid und Siliciumdioxid umfassen können. Die US 4'760'038 bezieht sich auf eine keramische Zusammensetzung mit verbesserter thermischer Schockbeständigkeit und Beständigkeit gegenüber Hochtemperaturzersetzung. Die keramische Zusammensetzung enthält Aluminiumoxid als Hauptbestandteil und einen oder mehrere bestimmter Zusätze, wie Zirkoniumdioxid, Titanoxid oder Magnesiumoxid. Hochtemperaturanwendungen, wie Brennhilfsmittel und Giessereianwendungen verlangen die Verwendung von keramischem Material das bestimmte Kombinationen von physikalischen Eigenschaften aufweist. Beispielsweise als Brennhilfsmittel muss das keramische Material gegenüber Waren, wie elektronische Komponenten, enthaltend z.B. bleihaltige Titanate, im wesentlichen inert sein. Das keramische Material muss ebenso viele Hochtemperaturzyklen bis zu Temperaturen von 1250°C-1480°C und sogar bis zu 1870°C vertragen. Darüberhinaus muss das Material eine niedrige Wärmespeicherfähigkeit haben, um schneller brennbar zu sein und um Energie zu sparen. In Giessereianwendungen muss die Keramik schwerste Aufheizzyklen, beispielsweise auf 1090-1540°C in 5 Sekunden, aushalten. Das keramische Material muss auch eine relativ hohe Reinheit und eine relativ hohe Durchlässigkeit ( 10 Poren pro Inch bei vertikal durchgeschnittenem Schaum) aufweisen, ebenso, wie es gegenüber der zu behandelnden Metalllegierung chemisch inert sein muss.

Zirkoniumdioxid ist ein keramisches Material, welches sich für solche Hochtemperaturanwendungen aufgrund seiner ausgezeichneten mechanischen Stabilität und seiner thermischen und chemischen Eigenschaften eignet. Unglücklicherweise ist es ein schwieriges Material, um damit zu arbeiten, weil, in einer unstabilisierten Form, es verschiedenen Phasenwechseln unterliegt, wenn es hohen Temperaturen ausgesetzt ist. Bei Raumtemperatur ist unstabilisiertes Zirkoniumdioxid monoklin. Wird es auf Temperaturen im Bereich von 1000°C-1200°C aufgeheizt, unterzieht es sich einem Phasenwechsel zu einr tetragonalen Struktur. Bei höheren Temperaturen im Bereich von etwa 2000°C läuft noch eine weitere Phasentransformation zu einer kubischen Struktur ab. Wenn es sich abkühlt, geht das Zirkoniumdioxid zurück durch die Phasentransformationen. Potentiell entgegenlaufende Volumenwechsel treten während diesen Phasentransformationen auf. Zum Beispiel zieht sich Zirkoniumdioxid zusammen, wenn es von der monoklinen zur tetragonalen Phase geht und expandiert während dem zurücklaufenden Phasenwechsel. Es wurde gefunden, dass Zirkoniumdioxid nur ein brauchbares keramisches Material für Hochtemperaturanwendungen sein kann, wenn die Menge an Zirkoniumdioxid, welches durch diese Phasentransformationen geht, streng in Grenzen gehalten wird.

Gemäss der CZ-Patentschrift 142, 962 (CA 65 808 d, Vol. 77, 1972) wurden Schutzschichten und Tiegel aus halbstabilisiertem ZrO₂-Material hergestellt um die Temperaturwechselbeständigkeit zu erhöhen.

Entsprechend ist es ein Gegenstand vorliegender Erfindung einen keramischen Körper aus Zirkoniumdioxid zu schaffen, der für Hochtemperaturanwendungen geeignet ist.

Es ist ein weiterer Gegenstand vorliegender Erfindung einen keramischen Körper zur Verfügung zu stellen, der ausgezeichnete thermische Schockresistenz und Hochtemperaturfestigkeitseigenschaften zeigt.

Ein noch weiterer Gegenstand vorliegender Erfindung ist das zur Verfügung stellen eines keramischen Körpers aus teilweise stabilisiertem Zirkoniumdioxid.

Darüberhinaus ist es ein Gegenstand vorliegender Erfindung ein Verfahren zur Herstellung genannter keramischer Körper zur Verfügung zu stellen. Nachfolgende Beschreibung macht diese und andere Gegenstände und Vorteile klarer.

Erfindungsgemäss wird dies durch einen keramischen Körper, wie in Anspruch 1 beschrieben, erzielt.

Die vorgenannten Gegenstände und Vorteile werden mit der Herstellung eines keramischen Körpers, enthaltend teilweise stabilisiertes Zirkoniumdioxid erhalten, ausgehend von einer thixotropen Aufschlämmung enthaltend monoklines Zirkoniumdioxid. Teilweise stabilisiertes Zirkoniumdioxid, wurde gefunden, ist ein besonders wünschenswertes und nützliches keramisches Material für Hochtemperaturanwendungen, da es die Fähigkeit hat, schwere thermische Zyklen auszuhalten. Weiter hat es den Vorteil gegenüber den meisten keramischen Artikeln, welche für die elektronische Industrie gebraucht werden, chemisch inert zu sein. Darüberhinaus können die mechanischen Eigenschaften dieser Zirkoniumdioxidform über einen weiten Bereich angepasst und kontrolliert werden, um den meisten Giesserei und Brennhilfsmittelanwendungen zu genügen. Die thermische Schockresistenzeigenschaften von Zirkoniumdioxid stammen aus den vorstehend erwähnten Phasenwechseln, die während dem Aufheizen und Abkühlen auftreten. Die vorliegende Erfindung beruht auf der Entdeckung des Vorteils, dass die kubische Phase des Zirkoniumdioxids bei Temperaturen weit unter 2370°C durch Zusatz eines Materials das als Quelle für die Stabilisierung des Zirkoniumdioxids, sowie als Grünbinder wirkt, gebildet werden kann. Geeignete Stabilisatoren, wurde gefunden, umfassen Magnesiumoxid, Calziumoxid, Ceroxid, Titandioxid und Mischungen davon. Diese Stabilisatoren lösen sich bedeutend in einer Zirkoniumdioxidphase bei Temperaturen über ungefähr 1500°C. Sie behalten im Zirkoniumdioxid eine kubische Phase beim Temperaturen weit unter 2370°C. Magnesium und Calciumoxid sind bevorzugt, da sie relativ billig sind. Unter Brennhilfsmittel werden beispielsweise wiederverwertbare Brennhilfsmittel, wie z.B. Kapseln, Stützen, Platten, Teller, Schalen oder Schiffchen verstanden.

Keramikkörper, geeignet zu Hochtemperaturanwendungen können in Uebereinstimmung mit vorliegender Erfindung hergestellt werden, durch: Herstellen eines wässrigen thixotropen Schlickers enthaltend als Feststoffe von 25 bis 98 Gew.-% monoklines Zirkoniumdioxid, von 0,5 bis 5 Gew.-% eines der vorstehend genannten Stabilisierungsmaterialien und bis zu 10 Gew.-% eines Bindermaterials; imprägnieren eines porösen Körpers mit dem Schlicker, trocknen des imprägnierten Körpers und brennen des imprägnierten Körpers bei einer Temperatur im Bereich von ungefähr 1500°C bis ungefähr 1700°C. Während des Brennens ist das Zirkoniumdioxid mindestens teilweise stabilisiert und der darunter liegende organische Schaum,der den porösen Körper formt, wird ausgetrieben oder verflüchtigt sich.

Keramische Körper, nach vorliegender Erfindung, sind durch die Anwesenheit von ca. 12 Gew.-% bis ca. 80 Gew.-% Zirkoniumdioxid in einer monoklinen Phase und einem Rest im wesentlichen in einer kubischen Phase bei Raumtemperatur charakterisiert. Als ein Resultat dieser Kombination von Phasen wird die Menge an Zirkoniumdioxid, welches während den Hochtemperaturanwendungen Phasentransformationen durchläuft, sorgfältig kontrolliert. Die keramischen Körper nach vorliegender Erfindung zeigen eine ausgezeichnete Kombination von Hochtemperatureigenschaften, einschliesslich Stärke und Widerstand gegen thermischen Schock und sind sehr geeignet für den Gebrauch in Anwendungen, wie Filter für geschmolzenes Metall, Brennhilfsmittel und Hochtemperaturkatalysatorträger.

Die nachfolgende detaillierte Beschreibung beschreibt die neuen keramischen Körper nach vorliegender Erfindung und die Herstellungsweise weiter. Alle Angaben in Prozenten und Teilen beziehen sich auf das Gewicht, sofern nicht anders angegeben.

Keramische Körper, herstellbar nach vorliegender Erfindung, können in einer Vielzahl von Hochtemperaturanwendungen zum Einsatz gelangen, dies aufgrund deren vorteilhaften Kombination von Eigenschaften. Zum Beispiel können sie als Filter für geschmolzenes Metall verwendet werden, da sie den hohen Temperaturen die mit solchen Anwendungen einhergehen, widerstehen, wobei die Filter chemisch inert im Bezug auf das zu filtrierende Metall sind. Sie können auch in anderen Giessereianwendungen eingesetzt werden. Darüberhinaus können sie als Brennhilfsmittel eingesetzt werden. Keramikkörper nach vorliegender Erfindung werden durch teilweise stabilisiertes Zirkoniumdioxid geformt aufgrund dessen Fähigkeit schwere thermische Zyklen zu ertragen sind und aufgrund des chemisch inerten Verhalten gegenüber den meisten keramischen Gegenständen, wie sie z.B. für die elektronische Industrie gebrannt werden. Zusätzlich können die mechanischen Eigenschaften von Zirkoniumdioxid über einen weiten Bereich für viele Hochtemperaturanwendungen zugeschnitten und kontrolliert werden.

Die keramischen Körper nach vorliegender Erfindung werden beispielsweise hergestellt zuerst durch die Herstellung eines wässrigen thixotropen Schlickers enthaltend als Feststoffe von beispielsweise im wesentlichen 30% bis 98%, vorzugsweise von 60% bis 98%, monoklines Zirkoniumdioxid und etwa 0,5% bis 5%, vorzugsweise von 2% bis 5% eines Materials welches Zirkoniumdioxid in situ stabilisiert, während es gleichzeitig als Grünbinder wirken kann und 0 bis 8,5%, vorzugsweise 0,5 bis 8,5%, eines Bindermaterials. Einer der neuen Aspekte nach vorliegender Erfindung ist die Verwendung von monoklinem Zirkoniumdioxid als ein Ausgangsmaterial. Die meisten auf Zirkoniumdioxid basierenden Körper werden durch die Anwendung von kubischem Zirkoniumdioxid als Ausgangsmaterial geformt. Während es vorteilhaft ist, monoklines Zirkoniumdioxid bei der Herstellung des Schlickers zu verwenden, kann man auch eine Kombination von monoklinem Zirkoniumdioxid und vorstabilisiertem Zirkoniumdioxid, wie mit Calciumoxid oder Magnesiumoxid vorstabilisiertes Zirkoniumdioxid, verwenden. Es ist wünschenswert, dass mindestens 20% des Zirkoniumdioxids im Schlicker eine durchschnittliche Korngrösse von weniger als 1 »m aufweist. Solche feinkörnigen Partikel helfen mit bei der Versinterung der Körper bei Temperaturen im Bereich von ca. 1500°C bis ca. 1700°C. Es ist auch wünschenswert, dass das verbleibende Zirkoniumdioxid eine mittlere Partikelgrösse im Bereich von ca. 1 »m bis ca. 50 »m aufweist. Diese Partikel mit grösserem Korn helfen mit, den Schwund der während der Verarbeitung auftritt, zu verkleinern. Geeignete Stabilisatormaterialien für die Anwendung im Schlicker schliessen ein, sind aber nicht darauf beschränkt, Materialien ausgewählt aus der Gruppe, bestehend aus Magnesiumoxid, Ceroxid, Calciumoxid, Titanoxid und Mischungen davon. Diese Materialien sind geeignet, da sie sich im Zirkoniumdioxid bei Temperaturen über 1500°C lösen und die Bildung der kubischen Phase in den Zirkoniumdioxidpartikeln bei Temperaturen weit unter 2370°C ermöglichen. Zum Beispiel sind 5% Magnesiumoxidzusatz in der Regel genügend um Zirkoniumdioxid voll bei 1600% zu stabilisieren. Man kann die Menge der kubischen Phase im endgültigen keramischen Körper kontrollieren durch die Kontrolle der Stabilisatormenge, die zum Schlicker zugegeben wird. Magnesiumoxid und Calciumoxid sind bevorzugte Stabilisierungsmaterialien, da sie relativ billig sind. Die Bindermaterialien können aus einem Material sein, ausgewählt aus der Gruppe von einem Acetat, einer Stärke, einem Gummi oder Mischungen davon. Ein geeignetes Stärkematerial kann Ethylcellulose sein oder ein geeigneter Gummi kann Xanthan-Gummi sein. Das bevorzugte Bindermaterial ist jedoch Magnesiumacetat. Dies kommt daher, weil während dem Kalzinieren das Magnesiumacetat sich zu Magnesiumoxid zersetzt, welches in feste Lösung im Zirkoniumdioxid übergeht und ein Teil des Zirkoniumdioxids in der kubischen Phase z.B. auch in situ stabilisiert.

Es reduziert ebenso die Menge an Stabilisierungsmaterial, das zum Schlicker zugegeben werden muss, um die gewünschte kubische Phase zu bilden. Wie aus dem vorhergehenden gesehen werden kann, dient Magnesiumacetat dem Doppelgrund, Quelle für das Stabilisierungsmaterial (MgO) und Grünbinder zu sein.

Der Schlicker kann auf folgende Weise hergestellt werden. Die verschiedenen Misch- und Mischerschritte können in einem Mischer mit hohen Scherkräften ausgeführt werden, z.B. in einem Eirich-Mischer RV 02 der Firma Eirich, Canada, einem Knetmischer z.B. Hobart N5O der Firma Hobart, Troy, Ohio, USA, und/oder in anderen an sich bekannten Mischern.

Das Bindermaterial wird zweckmässig zuerst in Wasser bei Temperaturen von rund 20° bis 90°C vorgelöst oder vordispergiert und unter Verwendung eines Hobart-Mischers während bis zu 5 Minuten gemischt. Ist das Bindermaterial Magnesiumacetat, ist es wünschenswert, dass das Wasser eine Temperatur im Bereich von ungefähr 70° bis 90°C hat. Das monokline Zirkoniumdioxid wird zweckmässig mit dem Stabilisierungsmaterial trocken gemischt unter Verwendung eines Eirich-Mischers. Die Mischzeit kann im vorliegenden Fall auch bis zu 5 Minuten betragen. Falls gewünscht, kann mehr als eine Quelle an monoklinem Zirkoniumdioxid mit dem Stabilisator gemischt werden. Zum Beispiel kann das Zirkoniumdioxid eine 50/50-Mischung eines feinkörnigen Materials, wie z.B. "SC 15"-Körnung sein, ein weiss brennendes monoklines Zirkoniumdioxid, hergestellt von Magnesium Elektron Inc. und eine gröbere "S"-Körnung ebenso hergestellt von Magnesium Elektron Inc.. Das Stabilisierungsmaterial, das mit dem Zirkoniumdioxid gemischt wird, kann ein z.B. feinkörniges reaktives Magnesiumoxid, verkauft unter dem Namen "Magchem 40" durch Martin Marietta Chemicals sein.

Nach dem das trockene Mischen vervollständigt ist, kann die wässrige Zübereitung enthaltend den gelösten oder dispergierten Binder, zum Zirkoniumdioxid und Stabilisierungsmaterial zugegeben werden. Die resultierende Zubereitung wird dann zweckmässig während einem Zeitintervall im Bereich von ca. 1 bis ca. 30 Minuten gemischt. Es ist möglich, dass während des Mischens Luft in den Schlicker eindringt. Falls dies geschieht, kann der Schlicker auf an sich bekannte Weise entgast werden.

Es wurde gefunden, dass Schlicker, hergestellt nach vorliegender Erfindung, in der Regel eine dynamische Viskosität im Bereich von ca. 20'000 Centipoise bis ca. 40'000 Centipoise, gemessen bei 20 U/min an einem Haake-Viskosimeter, Modell RV 3, 30 mm Durchmesser Bechergrösse, aufweisen. Zusätzlich haben die Schlicker eine thixotrope Rheologie und zeigen Anzeichen von Fliessspannung (yield stress).

Nachdem der Schlicker vorbereitet ist, wird ein flexibler poröser organischer Substratkörper, wie ein Polyurethanschaum, derart mit dem wässrigen keramischen Schlicker imprägniert, dass die faserähnlichen Stege damit bedeckt sind und die Hohlräume damit ausgefüllt sind. Falls gewünscht kann vor dem Imprägnieren eine Flockung am Substrat angebracht werden. Es wurde gefunden, dass das Aufbringen einer Flockung mithelfen kann, dass der Schlicker auf dem darunterliegenden Schaumsubstrat haftet. Normalerweise wird bevorzugt, dass Substrat durch einfaches Eintauchen für kurze Zeit, bis sichergestellt ist, dass das Substrat vollständig imprägniert ist, in den Schlicker einzutauchen.

Der imprägnierte Schaum kann dann zusammengedrückt werden, um einen Teil des Schlickers auszupressen, während die faserähnlichen Stegteile mit Schlicker bedeckt bleiben und sich eine Mehrzahl von blockierten Porenfenstern durch den Schaum hindurch ausbilden, wobei diese Blockierungen vorteilhaft durch die Keramikkörper gleichmässig verteilt, als angehäuft zusammen, liegen. In einem kontinuierlichen Verfahren kann man die imprägnierten Schäume durch vorgewählte Walzenspalte wenigstens eines Walzenstuhles durchlaufen lassen, um die erwünschte Austreibung des Schlickers aus dem Schaum zu erzielen und die gewünschte Menge Schlicker imprägnierend im Schaum zu belassen. Selbstverständlich kann dies von Hand durch einfaches Auspressen des flexiblen Schaummaterials bis zum gewünschten Mass erfolgen. Zu diesem Zeitpunkt ist der Schaum immer noch flexibel und kann in eine gewünschte Form gebracht werden. Der imprägnierte Schaum kann dann durch an sich bekannte Massnahmen getrocknet werden, wie beispielsweise Lufttrocknen, beschleunigtes Trocknen bei Temperaturen von 100 bis 700°C während 15 Minuten bis 6 Stunden oder durch Mikrowellentrocknung. Lufttrocknen kann innerhalb von 8 bis 24 Stunden erreicht werden. Nach dem Trocknen kann das Material auf eine erhöhte Temperatur gebracht werden, vorzugsweise von ca. 1500°C bis ca. 1700°C, um die keramische Beschichtung auf den faserähnlichen Stegen zu sintern. Geeignete Heizzeiten (Haltezeiten) sind im Bereich von ca. 15 Minuten bis zu 10 Stunden.

Während dieses Heizschrittes werden die organischen Materialien im Substrat ausgetrieben oder verflüchtigt und das Zirkoniumdioxid wird teilweise stabilisiert. Die resultierenden keramischen Körper sind gekennzeichnet durch die Anwesenheit von ca. 12% bis ca. 80% Zirkoniumdioxid in einer monoklinen Phase und den Rest des Zirkoniumdioxid im wesentlichen in einer kubischen Phase bei Raumtemperatur. Sie sind auch durch eine offene Zellstruktur mit einer Vielzahl von miteinander verbundenen Hohlräumen, umgeben durch Stege aus dem genannten Zirkoniumdioxid charakterisiert. Selbstverständlich kann die Menge an monoklinen und kubischen Phasen im Endprodukt auf verschiedene Anwendungen hin zugeschnitten werden. Beispielsweise haben Keramikkörper, die gekennzeichnet sind durch ca. 12% bis ca. 28% einer monoklinen Phase, besondere Bedeutung in der Anwendung als Brennhilfsmittel. Wie vorstehend erwähnt, kann die Menge der monoklinen Phase im Endprodukt durch Einstellen des Stabilisator- und/oder Bindegehaltes des Schlickers kontrolliert werden.

Es wurde auch gefunden, dass die Grösse der keramischen Körper die maximale thermische Schockresistenz lenkt. Kleine Körper können mit einem grossen monoklinen Anteil und hieraus einer hohen thermischen Schockbeständigkeit hergestellt werden, während grosse Stücke einen kleineren monoklinen Anteil verlangen, um eine Rissbildung zu vermeiden und deshalb eine tiefere Schockbeständtigkeit haben. Daher sind Filter für Giessereianwendungen typischerweise weniger als ca. 10 cm in der Grösse, während der monokline Anteil im Bereich von ca. 30% bis ca. 80% ist. Solche Filter, wurde gefunden, haben eine relativ hohe thermische Schockbeständigkeit und ausgezeichnete Hochtemperaturfestigkeitseigenschaften. In Uebereinstimmung mit vorliegender Erfindung werden die spezifischen Merkmale leichter verständlich durch den Einbezug der folgenden Angaben. Alle Angaben in Prozenten oder Teilen beziehen sich auf das Gewicht, sofern nicht anders angegeben.

### Beispiel 1

Zwei thixotrope Schlicker werden auf folgende Weise hergestellt. Der erste Schlicker (Schlicker A) wird hergestellt durch Dispersion von 548 g Magnesiumacetat in 1115 g Wasser bei einer Temperatur von 80°C und Mischen der Lösung in einem Hobart-Mischer für 5 Minuten. 5000 g monoklinem Zirkoniumdioxid, vorwiegend der Körnung "SC 15" mit einer durchschnittlichen Partikelgrösse von 0,6 »m, gemessen mit einem Sedigraphen (Partikelgrössebestimmung), wurde trocken mit 52 g eines Magnesiumoxides, verkauft unter dem Namen "Mag Chem 40", mittels gemischt. Danach wird die wässrige Lösung, enthaltend das dispergierte Magnesiumacetat, zu dem trocken vorgemischten Zirkoniumdioxid und dem Magnesiumoxidstabilisator gegeben
Der resultierende Schlicker wird dann während 5 Minuten unter Verwendung eines Eirich-Mischers der eine Rührschüssel und einen Rührer aufweist auf Stufe 1 gemischt. Die Geschwindigkeit der Rührschüssel und des Rührers werden dann auf Stufe 2 gestellt und es wird während weiteren 25 Minuten gemischt. Der Rührer wird dann ausgeschaltet zum die Rührschüsselgeschwindigkeit für 5 Minuten auf Stufe 1 gestellt, um den Schlicker zu entgasen. Schlicker A weist eine Zusammensetzung von 74,5 Gew.-% monoklinem Zirkoniumdioxid 0,8 Gew.-% Magnesiumoxid, 8,2 Gew.-% Magnesiumacetat und den Rest Wasser auf.

Der zweite Schlicker (Schlicker B) wird in der gleichen Art hergestellt mit den folgenden Ausnahmen: (1) 700 g Wasser von 80°C werden zu 550 g Magnesiumacetat zugegeben und (2) 2500 g monoklines Zirkoniumdioxid der Körnung "SC5 15" werden trocken mit 2500 g monoklinem Zirkoniumdioxid der Körnung "S" und 50 g Magnesiumoxid trocken gemischt. Der Schlicker B hat die Zusammensetzung, bezogen auf das Gewicht, von 79,4% monoklinem Zirkoniumdioxid 0,8% Magnesiumoxid, 8,7% Magnesiumacetat und dem Rest Wasser.

Je ein 10 x 10 x 2,5 cm Stück eines Polyurethanschaumes wird in jeden Schlicker eingetaucht. Ueberflüssiger Schlicker wird dadurch entfernt, dass jedes Muster durch eine Anordnung von Walzen geführt wird. Die imprägnierten Muster werden dann bei 125°C während 8 Stunden getrocknet. Nach dem Trocknen werden die imprägnierten Muster bei einer Temperatur von 1550°C während 3 Stunden gebrannt. Die untenstehende Tabelle 1 zeigt die Eigenschaften der resultierenden keramischen Körper.

**Tabelle 1**

| | Schlicker A | Schlicker B |
|---|---|---|
| Lineare Schwindung beim Brennen (%) | 18,1 (3,4%) | 12,5 |
| Feststoffgehalt des Schlickers (%) | 75,3 | 81,8 |
| Dynamische Viskosität des Schlickers (cP) | 20-40'000 | 20-40'000 |
| Dynamische Viskosität des Schlickers (PaS) | 20-40 | 20-40 |
| Expansionskoeffizient (COE 0-1000°C (MK-1)) | 9,6 | 9,6 |
| Theoretische Dichte (g/cm³) | 5,67 | 5,67 |
| Rohdichte (g/cm³) | 1,02 | 1,02 |
| relative Dichte (%) | 18,0 | 18,0 |
| Stabilisator (MgO %) | 3,0 | 3,0 |
| Gehalt an monokliner Phase (%) | 57 | 57 |
| Gehalt an kubischer Phase (%) | 43 | 43 |
| Brenntemperatur (°C) | 1550° | 1550° |
| MOR3pt--Raumtemperatur (psi) | 183 (43%) | 313 (20%) |
| MOR3pt--Raumtemperatur (MPa) | 1,3 | 2,2 |
| MOR3pt--1527-1566°C (psi) | -- | 154 (27%) |
| MOR3pt--1527-1556°C (MPa) | -- | 1,1 |

MOR3pt bedeutet "Modulus of Rupture", 3 Punkt Test.

Die Zahlen in Klammern beziehen sich auf die Standardabweichung, ausgedrückt in Prozenten der Durchschnittswerte. Alle Muster haben gute thermische Schockbeständigkeit.

### Beispiel 2 (Vergleich)

Für Vergleichszwecke wird ein keramischer Körper gebildet, wobei als Ausgangsmaterial ein vorwiegend vorstabilisiertes Zirkoniumdioxid angewendet wird. Die untenstehende Tabelle 2 bezeichnet die Menge der angewendeten Materialien um den Schlicker zu bilden und die Schlickerzusammensetzung.

**Tabelle 2**

| | Gewichtsprozent | Beispiel eines Ansatzes |
|---|---|---|
| Vorstabilisiertes Zirkoniumdioxid | 79,4% | 5000g |
| Magnesiumacetat | 9,5 | 600g |
| Wasser | 11,1 | 700g |

Der Schlicker wird auf folgende Weise hergestellt: Das Magnesiumacetat wird mittels eines sog. "Fisher"-Rührers in Wasser gelöst. Die Acetatlösung wird dann in eine Attritor-Mühle (Reibungsmühle) oder einen Attritor gegeben, die mit Zirkondioxidkugeln mit einem Durchmesser von 4,76 mm (3/16") gefüllt ist. Das vorstabilisierte Zirkoniumdioxid wird dann zur Acetatlösung gegeben und im Attritor während 30 Minuten auf Stufe 3 gemischt.

Ein Stück Polyurethanschaum wird in den Schlicker eingetaucht und wie in Beispiel 1 behandelt. Das Brennen findet bei einer Temperatur von 1550°C während 3 Stunden statt. Der resultierende keramische Körper hat 5% monokline Zirkoniumdioxidphase und 95% kubische Zirkoniumdioxidphase und eine schlechte Schockresistenz.

### Beispiel 3

Eine weitere Serie von Tests wird mit dem Schlickern C und D, die Kalziumoxid/Magnesiumoxid-stabilisierte Zirkoniundioxidformulierungen darstellen, gemacht. Beide Schlicker enthalten Magnesiumacetat als Binder. Jeder Schlicker ist aus einer Mischung aus monoklinem Zirkoniumdioxid und mit Kalziumoxid vorstabilisiertem Zirkoniumdioxid (TAM Zirox CS-25) zubereitet.

Tabelle 3 zeigt die Zusammensetzung der beiden Schlicker.

**Tabelle 3**

| Schlicker C | Schlicker D |
|---|---|
| 58,8% vorstabilisiertes Zirkoniumdioxid TAM CS-325 | 42% vorstabilisiertes Zirkoniumdioxid TAM CS-325 |
| 25,2% monoklines Zirkoniumdioxid | 42% monoklines Zirkoniumdioxid |
| 10,1% Wasser | 10,1% Wasser |
| 5,9% Magnesiumacetat | 5,9% Magnesiumacetat |

Die Schlicker werden wie folgt hergestellt:
1. Das Magnesiumacetat und das Wasser werden zusammengegeben und während 15 Minuten in einem Hobart-Mischer gemischt oder bis es komplett gelöst ist.
2. Währenddessen werden die trockenen Bestandteile während 5 Minuten in einem Eirich-Mischer bei Normalgeschwindigkeit gemischt.
3. Die Magnesiumacetatlösung wird zur trockenen Mischung zugegeben.
4. Es wird im Eirich-Mischer während 15 Minuten gemischt (normale Rotorgeschwindigkeit).
5. Nach vollständigem Mischen wird der Rotor abgeschaltet, jedoch der Rührbehälter wird während 5 Minuten weitergedreht, um den Schlicker zu entgasen.

Danach werden 10x10x2,5 cm Polyurethanschaum-Muster bis zu 18 bis 25% Dichte imprägniert und mit Mikrowellen getrocknet. Die imprägnierten Schaummuster werden bei 1570°C während ca. 3 Stunden gebrannt. Die physikalischen Daten der Körper sind in Tabelle IV festgehalten.

| | % monoklin | % kubisch | MOR MPa | Dichte gebrannte Muster | Thermische Schockbeständigkeit |
|---|---|---|---|---|---|
| Schlicker C | 20 | 80 | 1,66 | 1,01g/cm³ | mittel |
| Schlicker D | 40 | 60 | 1,43 | 0,79g/cm³ | gut |

### Beispiel 4

Weitere Tests werden durchgeführt um die optimalen Eigenschaften als Brennhilfsmittel zu bestimmen. Diese Tests bestehen in der Zübereitung von 2 Schlickern gemäss Schlicker C. Der einzige Unterschied besteht darin, dass der eine 6,5 Gew.-% Magnesiumacetat und der andere 3,5 Gew.-% Magnesiumacetat enthält. Die Muster werden gemäss Beispiel 3 hergestellt. Diese werden dann als Durchstossplatten in einem Durchstossofen getestet. In dieser Anwendungsform ist die wichtigste Eigenschaft die Anzahl von Durchläufen, die eine Platte durch den Ofen aushält, bevor sie versagt. Die Resultate des Experiments sind in nachfolgender Tabelle festgehalten.

**Tabelle V**

| % Magnesiumacetat | % monoklin | Durchschnittliche Zahl von Durchläufen |
|---|---|---|
| 6,5 | 24,5 | 8,9 |
| 3,5 | 43,7 | 4,0 |

Die Platten mit einem Durchschnitt von 24,5 % monoklinem Zirkon hielten mehr Durchlaufzyklen aus als die Platten mit 43,7 % monoklinem Zirkoniumdioxid. Daraus kann ersehen werden, dass keramische Körper mit einer ausgezeichneten Konbination von Hochtemperatureigenschaften erhalten werden.

Es ist offensichtlich, dass in Uebereinstimmung mit vorliegender Erfindung keramische Körper aus teilweise stabilisiertem Zirkoniumdioxid gebildet werden, welche für die vorgenannten Gegenstände, Mittel und Vorteile voll befriedigen.

## Patentansprüche

1. Keramischer Körper für Hochtemperaturanwendungen, enthaltend Zirkoniumdioxid, dadurch gekennzeichnet, dass der Körper eine offenzellige Schaumstruktur mit einer Vielzahl von untereinander verbundenen Hohlräumen, die mit Stegen aus Zirkoniumdioxid umgeben sind, aufweist, und dass 12 bis 80 Gew.-% des Zirkoniumdioxides in einer monoklinen Phase und der Rest des Zirkoniumdioxides im wesentlichen aus einer bei Raumtemperatur kubischen Phase vorhanden sind.

2. Keramischer Körper gemäss Anspruch 1, wobei der Körper einen Filter zum Filtrieren von geschmolzenem Metall umfasst.

3. Keramischer Körper gemäss Anspruch 1, wobei der Körper ein Brennhilfsmittel darstellt.

4. Keramischer Körper gemäss Anspruch 1, dadurch gekennzeichnet ist, dass 15 bis 28% des Zirkoniumdioxides in einer monoklinen Phase und der Rest im wesentlichen aus einer bei Raumtemperatur kubischen Phase vorhanden sind.

5. Verfahren zur Herstellung eines hochtemperaturbeständigen keramischen Körpers, gemäss einem der Ansprüche 1 bis 4, durch Eintauchen eines porösen Körpers in einen Schlicker, wobei der poröse Körper mit dem Schlicker imprägniert wird, dass der imprägnierte Körper getrocknet wird und dass der imprägnierte poröse Körper durch Aufheizen auf eine erhöhte Temperatur gebracht wird, dadurch gekennzeichnet, dass durch das Aufheizen auf eine erhöhte Temperatur das Zirkoniumdioxid wenigstens teilweise stabilisiert wird und den keramischen Körper bildet, und dass das Verfahren mittels eines wässrigen thixotropen Schlickers, enthaltend als Feststoffe, von 25 Gew.-% bis 98 Gew.-% monoklines Zirkoniumdioxid, von 0,5 Gew.-% bis 5 Gew.-% eines Stabilisatormaterials und bis zu 10 Gew.-% eines Bindermaterials, ausgeführt wird und der darunter liegende organische Schaum, der den porösen Körper formt, ausgetrieben wird oder sich verflüchtigt.

6. Verfahren gemäss Anspruch 5, dadurch gekennzeichnet, dass der Schritt der Aufheizung des Körpers auf eine Temperatur im Bereich von 1500°C bis 1700°C und halten bei diesen Temperaturen während 15 Minuten bis zu 10 Stunden umfasst und dabei ein keramischer Körper hergestellt wird, in dem 12 bis 65 Gew.-% des darin enthaltenden Zirkoniumdioxids in einer monoklinen Phase und von 35 bis 88 Gew.-% des Zirkoniumdioxids bei Raumtemperatur in einer kubischen Phase vorliegen.

7. Verfahren nach Anspruch 5, worin der Schritt der Bildung des Schlickers dadurch gekennzeichnet ist, dass das monokline Zirkoniumdioxid und das Stabilisatormaterial trocken vorgemischt werden und dass zu diesem trocken vorgemischten Zirkoniumdioxid und Stabilisatormaterial Wasser oder eine wässrige Zubereitung enthaltend das Bindermaterial zugegeben wird, um den Schlicker zu bilden.

8. Verfahren gemäss Anspruch 7, worin der Schritt der Bildung des Schlickers weiter dadurch gekennzeichnet ist, dass das Bindermaterial im Wasser bei einer Temperatur im Bereich von 20°C bis 90°C dispergiert wird, um eine wässrige Zubereitung zu bilden, wobei die wässrige Zubereitung bis zu 5 Stunden gemischt wird, und dass der Zugabeschritt die Zugabe der wässrigen Zubereitung zur trockenen Vormischung aus Zirkoniumdioxid und dem Stabilisatormaterial umfasst.

9. Verfahren gemäss Anspruch 7, worin der Schritt der Schlickerbildung dadurch gekennzeichnet ist, dass der Schlicker von einer Minute bis zu 30 Minuten gerührt wird.

10. Verfahren gemäss Anspruch 8, dadurch gekennzeichnet, dass der Schritt des trocknen Vormischens des Zirkoniumdioxids mit einem Material, ausgewählt aus der Gruppe von Magnesiumoxid, Calziumoxid, Ceroxid, Titanoxid oder Mischungen davon erfolgt, und dass der Zubereitungsschritt das Auflösen oder die Dispersion eines Materials, ausgewählt aus der Gruppe aus Stärke,eines Gummis, Magnesiumacetat oder Mischungen davon, in Wasser, umfasst.

11. Wässriger Schlicker für die Verwendung bei der Herstellung von hochtemperaturbeständigen Körpern gemäss einem der Ansprüche 1 - 4, dadurch gekennzeichnet, dass der Schlicker folgende Feststoffe enthält: von 25 bis 98 Gew.-% monoklines Zirkoniumdioxid, von 0,5 bis 5 Gew.-% Stabilisatormaterial, bis zu 10 Gew.-% eines Bindermaterials und der Rest Wasser.

12. Wässriger Schlicker gemäss Anspruch 11, dadurch gekennzeichnet, dass mindestens 20 % des monoklinen Zirkoniumdioxids eine mittlere Partikelgrösse von weniger als 1 »m aufweisen.

13. Wässriger Schlicker gemäss Anspruch 11, dadurch gekennzeichnet, dass mindestens 50 % des monoklinen Zirkoniumdioxids eine mittlere Partikelgrösse von weniger als 1 »m aufweisen und der Rest des Zirkoniumdioxids eine mittlere Partikelgrösse im Bereich von 1 »m bis 50 »m aufweisen.

14. Wässriger Schlicker gemäss Anspruch 11, dadurch gekennzeichnet, dass sich das Stabilisatormaterial im Zirkoniumdioxid bei Temperaturen über 1500°C löst und als Grünbinder wirkt.

15. Wässriger Schlicker gemäss Anspruch 11, dadurch gekennzeichnet, dass das Stabilisatormaterial aus der Gruppe von Magnesiumoxid, Calciumoxid, Ceroxid, Titanoxid oder Mischungen davon ausgewählt ist.

16. Wässriger Schlicker nach Anspruch 11, dadurch gekennzeichnet, dass der Binder aus der Gruppe von Magnesiumacetat, Stärke, Gummi oder Mischungen davon ausgewählt ist.

17. Wässriger Schlicker gemäss Anspruch 11, dadurch gekennzeichnet, dass der Schlicker eine dynamische Viskosität im Bereich von 20'000 bis 40'000 Centipoise aufweist.

18. Wässriger Schlicker gemäss Anspruch 11, dadurch gekennzeichnet, dass das monokline Zirkoniumdioxid in einer Menge von 60 bis 98 Gew.-% und das Stabilisatormaterial in Mengen von 2 bis 5 Gew.-% vorliegen.

## Claims

1. Ceramic body for high-temperature applications, containing zirconia, characterised in that the body has an open-cell foam structure with a plurality of interconnected cavities surrounded by webs of Zirconia and that 12 to 80 % by weight of the zirconia is in a monoclinic phase and the remainder of the zirconia is essentially in a cubic phase at room temperature.

2. Ceramic body according to claim 1, in which the body comprises a filter for filtering molten metal.

3. Ceramic body according to claim 1, in which the body is an item of kiln furniture.

4. Ceramic body according to claim 1, characterised in that 15 to 28 % of the zirconia is in a monoclinic phase and the remainder is essentially in a cubic phase at room temperature.

5. Process for the production of a high-temperature resistant ceramic body according to one of claims 1 to 4, by immersing a porous body in a slurry, the porous body being impregnated with the slurry, the impregnated body being dried and the impregnated porous body being brought to an elevated temperature by heating, characterised in that, as a result of the heating to an elevated temperature, the zirconia is at least partially stabilised and the ceramic body is formed, and that the process is carried out by means of an aqueous thixotropic slurry having a solids content consisting of from 25 % by weight to 98 % by weight monoclinic zirconia, from 0.5 % by weight to 5 % by weight of a stabilising material and up to 10 % by weight of a binder material and the underlying organic foam forming the porous body is expelled or evaporates.

6. Process according to claim 5, characterised in that the heating step comprises heating the body to a temperature in the region of 1500°C to 1700°C and keeping it at these temperatures for 15 minutes to 10 hours, resulting in a ceramic body in which 12 to 65 % by weight of the zirconia contained therein is in a monoclinic phase and from 35 to 88 % by weight of the zirconia is in a cubic phase at room temperature.

7. Process according to claim 5, in which the slurry forming step is characterised in that the monoclinic zirconia and the stabilising material are premixed in the dry state and that water or an aqueous preparation containing the binder material is added to this dry premixed zirconia and stabilising material in order to form the slurry.

8. Process according to claim 7, in which the slurry forming step is further characterised in that the binder material is dispersed in water at a temperature in the region of 20°C to 90°C in order to form an aqueous preparation, the aqueous preparation being mixed for up to 5 hours, and that the adding step comprises adding the aqueous preparation to the dry premix of zirconia and stabilising material.

9. Process according to claim 7, in which the slurry forming step is characterised in that the slurry is stirred for from one minute to 30 minutes.

10. Process according to claim 8, characterised in that the dry premixing step comprises premixing the zirconia is with a material selected from the group consisting of magnesia, calcia, ceria, titania or mixtures thereof and that the preparing step comprises dissolving or dispersing a material selected from the group consisting of starch, a gum, magnesium acetate or mixtures thereof in water.

11. Aqueous slurry for use in the production of high-temperature resistant bodies according to one of claims 1 - 4, characterised in that the slurry has the following solids content: from 25 to 98 % by weight monoclinic zirconia, from 0.5 to 5 % by weight stabilising material, up to 10 % by weight of a binder material and the remainder water.

12. Aqueous slurry according to claim 11, characterised in that at least 20 % of the monoclinic zirconia has an average particle size of less than 1 »m.

13. Aqueous slurry according to claim 11, characterised in that at least 50 % of the monoclinic zirconia has an average particle size of less than 1 »m and the remainder of the zirconia has an average particle size in the region of 1 »m to 50 »m.

14. Aqueous slurry according to claim 11, characterised in that the stabilising material dissolves in the zirconia at temperatures of more than 1500°C and acts as a green binder.

15. Aqueous slurry according to claim 11, characterised in that the stabilising material is selected from the group consisting of magnesia, calcia, ceria, titania or mixtures thereof.

16. Aqueous slurry according to claim 11, characterised in that the binder is selected from the group consisting of magnesium acetate, starch, gum or mixtures thereof.

17. Aqueous slurry according to claim 11, characterised in that the slurry has a dynamic viscosity in the region of 20 000 to 40 000 centipoises.

18. Aqueous slurry according to claim 11, characterised in that the monoclinic zirconia is present in a quantity of from 60 to 98 % by weight and the stabilising material in quantities of from 2 to 5 % by weight.

## Revendications

1. Corps céramique pour l'utilisation à haute température, contenant du dioxyde de zirconium caractérisé en ce que le corps présente une structure de mousse à cellules ouvertes avec une pluralité de volumes vides reliés entre eux, qui sont entourés de nervures en dioxyde de zirconium et que 12 à 80 % en poids de l'oxyde de zirconium se trouve sous forme de phase monoclinique et le reste du dioxyde de zirconium est essentiellement sous forme d'une phase cubique à température ambiante.

2. Corps céramique selon la revendication 1, où le corps comprend un filtre pour filtrer du métal fondu.

3. Corps céramique selon la revendication 1, où le corps représente un matériel d'enfournement.

4. Corps céramique selon la revendication 1, caractérisé en ce que 15 à 28 % du dioxyde de zirconium se présentent sous forme de phase monoclinique et le reste est essentiellement sous forme de phase cubique à température ambiante.

5. Procédé de production d'un corps céramique résistant à haute température selon l'une des revendications 1 à 4, par trempage d'un corps poreux dans une barbotine, où le corps poreux est imprégné de la barbotine, que le corps imprégné est séché et qu'on porte le corps poreux imprégné par un chauffage à une température élevée, caractérisé en ce que par chauffage à une température élevée le dioxyde de zirconium est stabilisé au moins en partie et forme le corps céramique et qu'on réalise le procédé au moyen d'une barbotine thixotrope aqueuse contenant comme solides de 25 % en poids à 98 % en poids de dioxyde de zirconium monoclinique, de 0,5 % en poids à 5 % en poids d'un matériau stabilisant et jusqu'à 10 % en poids d'un liant et qu'on expulse ou qu'on volatilise la mousse organique sous-jacente qui forme le corps poreux.

6. Procédé selon la revendication 5, caractérisé en ce que la phase de chauffage du corps à lieu à une température dans l'intervalle de 1 500°C à 1 700°C et le maintien à ces températures dure entre 15 min et 10 h et qu'on prépare ainsi un corps céramique dans lequel 12 à 65 % du dioxyde de zirconium qui s'y trouve est sous forme de phase monoclinique et de 35 à 88 % en poids du dioxyde de zirconium se présente sous forme d'une phase cubique à température ambiante.

7. Procédé selon la revendication 5, où l'étape de formation de la barbotine est caractérisée en ce qu'on prémélange à sec le dioxyde de zirconium monoclinique et le matériau stabilisant et qu'on ajoute à ce dioxyde de zirconium prémélangé à sec et à ce matériau stabilisant de l'eau ou une préparation aqueuse contenant le matériau liant pour former la barbotine.

8. Procédé selon la revendication 7, où l'étape de formation de la barbotine est encore caractérisée en ce qu'on disperse le matériau liant dans l'eau à une température comprise dans l'intervalle de 20°C à 90°C, pour former une préparation aqueuse, où on mélange la préparation aqueuse pendant une durée pouvant atteindre 5 h, et que l'étape d'addition comprend l'addition de la préparation aqueuse au prémélange à sec de dioxyde de zirconium et de matériau stabilisant.

9. Procédé selon la revendication 7, où l'étape de formation de la barbotine est caractérisée en ce qu'on agite la barbotine entre 1 min et 30 min.

10. Procédé selon la revendication 8, caractérisé en ce qu'on réalise l'étape de prémélange à sec du dioxyde de zirconium avec un matériau choisi dans le groupe de l'oxyde de magnésium, l'oxyde de calcium, l'oxyde de cérium, l'oxyde de titane ou leurs mélanges et que l'étape de préparation comprend la dissolution ou la mise en dispersion d'un matériau choisi dans le groupe de l'amidon, d'un caoutchouc, de l'acétate de magnésium ou de leurs mélanges, dans l'eau.

11. Barbotine aqueuse pour l'utilisation à la préparation de corps résistants à haute température selon l'une des revendications 1-4, caractérisée en ce que la barbotine contient les solides suivants : de 25 à 98 % en poids de dioxyde de zirconium monoclinique, de 0,5 à 5 % en poids d'un matériau stabilisant, jusqu'à 10 % en poids d'un matériau liant et le reste est de l'eau.

12. Barbotine aqueuse selon la revendication 11, caractérisée en ce qu'au moins 20 % du dioxyde de zirconium monoclinique présente une taille moyenne de particule inférieure à 1 »m.

13. Barbotine aqueuse selon la revendication 11, caractérisée en ce qu'au moins 50 % du dioxyde de zirconium monoclinique présente une taille de particule moyenne inférieure à 1 »m et le reste du dioxyde de zirconium présente une taille moyenne de particule dans l'intervalle de 1 »m à 50 »m.

14. Barbotine aqueuse selon la revendication 11, caractérisée en ce que le matériau stabilisant se dissout dans le dioxyde de zirconium à des températures supérieures à 1 500°C et qu'il agit comme liant de produit cru.

15. Barbotine aqueuse selon la revendication 11, caractérisée en ce que le matériau stabilisant est choisi dans le groupe de l'oxyde de magnésium, de l'oxyde de calcium, de l'oxyde de cérium, de l'oxyde de titane ou de leurs mélanges.

16. Barbotine aqueuse selon la revendication 11, caractérisée en ce que le liant est choisi dans le groupe de l'acétate de magnésium, de l'amidon, du caoutchouc ou de leurs mélanges.

17. Barbotine aqueuse selon la revendication 11, caractérisée en ce que la barbotine présente une viscosité dynamique dans l'intervalle de 20 000 à 40 000 Cp.

18. Barbotine aqueuse selon la revendication 11, caractérisée en ce que le dioxyde de zirconium monoclinique représente 60 à 98 % en poids et que le matériau stabilisant représente 2 à 5 % en poids.
